# EUROPEAN PATENT APPLICATION

(11) **EP 1 905 616 A2**
(43) Date of publication of application: **02.04.2008**
(21) Application number: 07253837.4
(22) Date of filing: 27.09.2007
(51) Int. Cl.: B60C 9/20

(54) **Pneumatic radial tire**

(30) Priority: 29.09.2006 JP 2006268757; 21.09.2007 JP 2007245422
(71) Applicant: Bridgestone Corporation, Tokyo 104-8340 (JP)
(72) Inventor: Hashimoto, Yukihiro, Chuo-ku Tokyo 104-8340 (JP)
(74) Representative: Whalley, Kevin

(57) **Abstract**

A pneumatic radial tire (10), comprising: a carcass (12) toroidally extending across between a pair of bead cores (16); an outer side belt layer (20) provided outside of the carcass in a radial direction, in which a plurality of cords extending in a direction inclined with respect to a tire equatorial plane are buried in covering rubber; an inner side belt layer (30) provided between the outer side belt layer (20) and the carcass (12), in which a plurality of cords, made of the same material as that of the cords of the outer side belt layer, and extending in a direction crossing the cords of the outer side belt layer, are buried in covering rubber; and a tread provided outside of the outer side belt layer in the radial direction; wherein a total strength of the outer side belt layer (20) is larger than a total strength of the inner side belt layer (30), is provided.

## Description

### BACKGROUND

### Technical Field

The present invention relates to a pneumatic radial tire, and particularly to a pneumatic radial tire for a passenger car that assures a large residual cornering force to improve straight-advancing stability of a vehicle while suppressing deterioration in riding comfort performance and uneven wear resistant performance.

An inclination (inclination intended for drainage of a road surface) typically called cant is provided to the road surface where a vehicle runs, and a predetermined residual cornering force needs to be given to a tire in order to assure a straight-advancing property against this inclination. For example, in the case of a tire of two-steel-belt structure, and the left hand traffic (in the case where an upward inclination from left to right is provided to the road surface), cords of an outmost steel belt layer are inclined upward from left to right, as viewed from the outer peripheral side of the tire, which generates a residual cornering force in a direction preventing the tire from declining on the road surface inclined upward from left to right, so that the straight-advancing property of the vehicle can be attained.

In recent years, it has been demanded that a vehicle attain higher straight-advancing stability (improve a vehicle flow property). For this, it is necessary that a residual cornering force corresponding to the cant of the road surface (hereinafter PRCF) be generated in a tire, but larger PRCF has been demanded with increased size and weight of a vehicle in recent years. This demand has been addressed by the use of a belt with a higher total strength, or by the appropriateness of a lug groove angle of a tread pattern (referring to Japanese Patent Application Laid-Open No. 2004-98791).

However, there has arisen a problem that the use of the belt with the high total strength for assuring large PRCF increases the rigidity of the belt, thereby deteriorating the riding comfort performance. Also, there has arisen a problem that since the appropriateness of the lug groove angle of the tread pattern is intended to attain the PRCF by the deformation of a block of a tire shoulder portion and its reactive force, there is a possibility that the movement (slip) of the block of the tire shoulder portion becomes large, thereby deteriorating uneven wear resistant performance.

### SUMMARY

In light of the above-described situations, an object of the present invention is to provide a pneumatic radial tire that assures a large residual cornering force to improve the straight-advancing stability of a vehicle while suppressing deterioration in riding comfort performance and uneven wear resistant performance.

In order to achieve the above-described object, a pneumatic radial tire of a first aspect of the present invention comprise a carcass toroidally extending across between a pair of bead cores; an outer side belt layer provided outside of the carcass in a radial direction, in which a plurality of cords extending in a direction inclined with respect to a tire equatorial plane are buried in covering rubber; an inner side belt layer provided between the outer side belt layer and the carcass, in which a plurality of cords, made of the same material as that of the cords of the outer side belt layer, and extending in a direction crossing the cords of the outer side belt layer, are buried in covering rubber; and a tread provided outside of the outer side belt layer in the radial direction; wherein a total strength of the outer side belt layer is larger than a total strength of the inner side belt layer.

Next, the action of the pneumatic radial tire of the first aspect is described.

In an ordinary tire in which the outer side belt layer and the inner side belt layer are made of cords having the same strength, and the total strengths thereof are equal, an increase in the strength of the cords results in an increase in circumferential rigidity of the overall belt layer and deterioration of the riding comfort performance. Also, in the appropriateness of the groove angle of the tread pattern, the uneven wear resistant performance deteriorates.

Here, by making the total strength of the outer side belt layer, which contributes to PRCF more highly than the inner side belt layer, larger than the total strength of the inner side belt layer, the increase in circumferential rigidity of the overall belt layer is suppressed more than the conventional ordinary tire having the equal total strength even when large PRCF is assured. Therefore, the deterioration in riding comfort performance is suppressed more than the conventional tire. Moreover, since the belt component is adjusted to assure large PRCF, the deterioration in uneven wear resistant performance is suppressed more than a conventional case where the pattern component of the tread is adjusted to assure large PRCF.

Accordingly, in the pneumatic radial tire of the present invention, large PRCF is assured, so that the straight-advancing stability of a vehicle is improved, and the deterioration in riding comfort performance and uneven wear resistant performance is suppressed.

In this case, the total strength means a value obtained by multiplying the number of the cords implanted in per 50 mm of the belt layer by the strength of one cord at the time of breaking.

A pneumatic radial tire of a second aspect of the present invention is characterized in that in the pneumatic radial tire of the first aspect, the total strength of the outer side belt layer is 1.05 to 1.5 times the total strength of the inner side belt layer.

Next, the action of the pneumatic radial tire of the second aspect is described.

If the total strength of the outer side belt layer is less than 1.05 times the total strength of the inner side belt layer, the effect of assuring large PRCF cannot be obtained, and if it exceeds 1.5 times, an extreme lateral force occurs, and with this, a lateral difference occurs in the movement of the vehicle with respect to lateral inputs of steering, which may bring about an adverse effect on steering stability. Accordingly, the total strength of the outer side belt layer is preferably set to be 1.05 to 1.5 times the total strength of the inner side belt layer.

A pneumatic radial tire of a third aspect of the present invention is characterized in that in the pneumatic radial tire of the first aspect or the second aspect, a diameter of each of the cords of the outer side belt layer is larger than that of each of the cords of the inner side belt layer.

Next, the action of the pneumatic radial tire of the third aspect is described.

By making the diameter of the cord of the outer side belt layer larger than the diameter of the cord of the inner side belt layer, the total strength of the outer side belt layer can be made larger than the total strength of the inner side belt layer.

A pneumatic radial tire of a fourth aspect of the present invention is characterized in that in any one of the pneumatic radial tires of the first aspect to the third aspect, the cords of the outer side belt layer and the cords of the inner side belt layer are each formed by stranding a plurality of monofilaments, and the number of the monofilaments of the cord of the outer side belt layer is larger than the number of the monofilaments of the cord of the inner side belt layer.

Next, the action of the pneumatic radial tire of the fourth aspect is described.

By making the number of the monofilaments of the cord of the outer side belt layer larger than the number of the monofilaments of the cord of the inner side belt layer, the total strength of the outer side belt layer can be made larger than the total strength of the inner side belt layer.

A pneumatic radial tire of a fifth aspect of the present invention is characterized in that in any one of the pneumatic radial tires of the first aspect to the fourth aspect, the number of implanted cords of the outer side belt layer is larger than the number of implanted cords of the inner side belt layer.

Next, the action of the pneumatic radial tire of the fifth aspect is described.

By making the number of the cords implanted in the outer side belt layer larger than the number of the cords implanted in the inner side belt layer, the total strength of the outer side belt layer can be made larger than the total strength of the inner side belt layer.

A pneumatic radial tire of a sixth aspect of the present invention is characterized in that in any one of the pneumatic radial tires of the first aspect to the fifth aspect, the cords of the outer side belt layer and the cords of the inner side belt layer are made of steel.

Next, the action of the pneumatic radial tire of the sixth aspect is described.

Since the cords of the outer side belt layer and the cords of the inner side belt layer are made of steel, the belt rigidity of the tire is improved, so that the steering stability performance is improved.

In the pneumatic radial tire of the present invention, a large residual cornering force is assured, such that the straight-advancing stability of a vehicle is improved, and the deterioration in riding comfort performance and uneven wear resistant performance is suppressed.

### BRIEF DESCRIPTION OF THE DRAWINGS

Exemplary embodiments of the present invention will be described in detail based on the following figures, wherein:
Fig. 1 is a cross-sectional view along a tire shaft direction, showing a pneumatic radial tire relating to a first embodiment;
Fig. 2A is a cross-sectional view showing a second cord of the pneumatic radial tire relating to the first embodiment;
Fig. 2B is a cross-sectional view showing a first cord of the pneumatic radial tire relating to the first embodiment; and
Fig. 2C is a cross-sectional view showing another example of the first cord of the pneumatic radial tire relating to the first embodiment.

### DETAILED DESCRIPTION

### [First Embodiment]

### (Constitution)

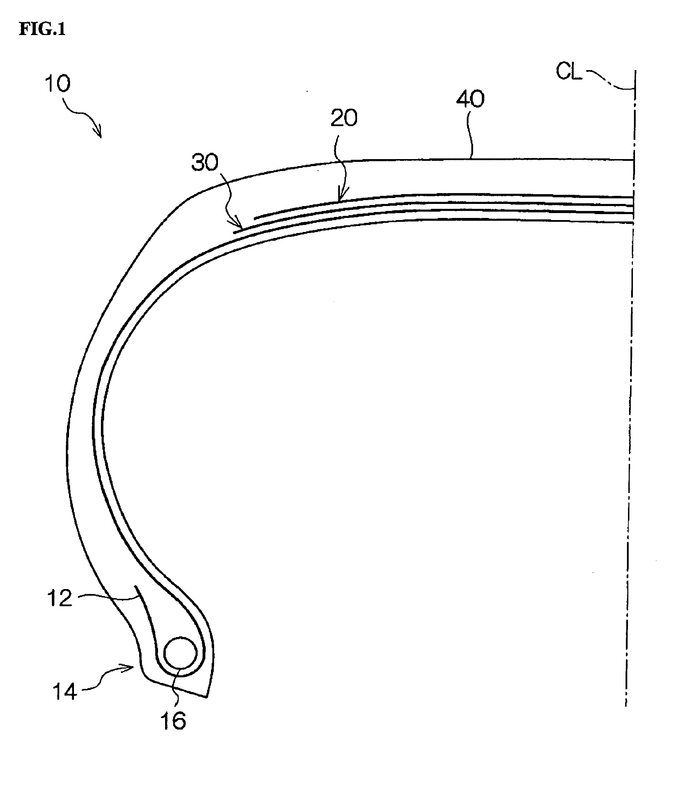

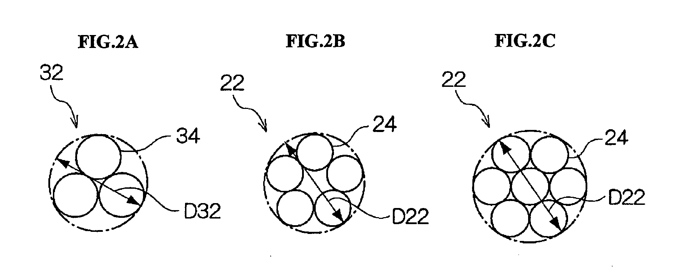

Next, a first embodiment of a pneumatic radial tire of the present invention is described with reference to Figs. 1 and 2A to 2C. The pneumatic radial tire of the present embodiment is a pneumatic radial tire 10 for a passenger car, and a tire size thereof is 185/60R15.

As shown in Fig. 1, the pneumatic radial tire 10 includes a carcass 12 in which cords extending in a direction crossing a tire equatorial surface CL (hereinafter called equatorial surface CL) are buried. While in the present embodiment, the carcass is formed into one layer, the constitution does not need to be limited to this, and two or more layers may be formed.

### (Carcass)

The carcass 12 is wound up at both end portions thereof around bead cores 16 buried in bead parts 14 from the inner side to the outer side of the tire. In this carcass 12, a plurality of cords (e.g., organic fiber cords such as nylon) extending in a radial direction are arrayed in parallel and buried in covering rubber thereof

### (Outer side belt Layer)

One outer side belt layer 20 is provided outside of the carcass 12 in the tire radial direction. In this outer side belt layer 20, a plurality of first cords 22 extending in a direction inclined with respect to the equatorial surface CL are arrayed in parallel and buried in the covering rubber. These first cords 22 are preferably inclined in a range of 58 to 74 degrees with respect to the equatorial surface CL. Moreover, the first cords 22 are each made of one steel monofilament 24 or a steel cord made up by stranding a plurality of the steel monofilaments 24. The first cords 22 of the present embodiment are steel cords made up by stranding five steel monofilaments 24 shown in Fig. 2B in a 1×5 type structure.

### (Inner side belt Layer)

One inner side belt layer 30 is provided between the outer side belt layer 20 and the carcass 12. In this inner side belt layer 30, a plurality of second cords 32 inclined with respect to the equatorial surface CL and extending in a direction crossing the first cords 22 of the outer side belt layer 20 are arrayed in parallel and buried in the covering rubber. These second cords 32 are preferably inclined in a range of 58 to 74 degrees with respect to the equatorial surface CL. Moreover, the second cords 32 are each made of one steel monofilament 34 or a steel cord made up by stranding a plurality of the steel monofilaments 34. The second cords 32 of the present embodiment are steel cords made up by stranding three steel monofilaments 34 shown in Fig. 2A in a 1×3 type structure.

### (Tread)

A tread 40 is provided outside of the outer side belt layer 20 in the tire radial direction. In an outer peripheral surface of this tread 40, a plurality of drainage grooves (illustration is omitted) necessary at the time of running on a wet road surface are provided.

Moreover, a total strength GF20 of the outer side belt layer 20 is set to a larger value than that of a total strength GF30 of the inner side belt layer 30. This total strength GF20 preferably satisfies a condition of 1.05 to 1.5 times the total strength GF30.

Furthermore, a diameter D22 of each of the first cords 22 of the outer side belt layer 20 is preferably larger than a diameter D32 of each of the second cords 32 of the inner side belt layer 30.

Still further, the number of implanted first cords 22 of the outer side belt layer 20 is preferably larger than the number of implanted second cords 32 of the inner side belt layer 30.

Additionally, the number of the steel monofilaments 24 of the outer side belt layer 20 is preferably larger than the number of the steel monofilaments 34 of the inner side belt layer 30.

While in the present embodiment, it is preferable that the diameter D22 of the first cords 22 is larger than the diameter D32 of the second cord 32, the number of implanted first cords 22 of the outer side belt layer 20 is larger than the number of implanted second cords 32 of the inner side belt layer 30, and the number of the steel monofilaments 24 of the first cord 22 is larger than the number of the steel monofilaments 34 of the second cord 32, the constitution does not need to be limited to this, as long as the total strength GF20 satisfies the condition of 1.05 to 1.5 times the total strength GF30. For example, a constitution may be employed in which the number of implanted first cords 22 of the outer side belt layer 20 may be smaller than, or the same as the number of implanted second cords 32 of the inner side belt layer 30.

While in the present embodiment, the first cords 22 are the steel cords made up by stranding the five steel monofilaments 24 as shown in Fig. 2B in the 1×5 type structure, and the second cords 32 are the steel cords made up by stranding the three steel monofilaments 34 as shown in Fig. 2A in the 1×3 type structure, the constitution does not need to be limited to this, as long as the total strength GF20 satisfies the condition of 1.05 to 1.5 times the total strength GF30. For example, a constitution may be employed in which the first cord 22 may be made up by stranding the seven steel monofilaments 24 as shown in Fig. 2C in a 1+6 type structure.

### (Action)

According to the pneumatic radial tire 10 of the present embodiment, even when large PRCF is assured by making the total strength GF20 of the outer side belt layer 20, which contributes to the PRCF more highly than the inner side belt layer 30, larger than the total strength GF30 of the inner side belt layer 30, an increase in circumferential rigidity of the overall belt layers is suppressed more than that of a conventional tire having equal total strengths at the outer side belt layer and the inner side belt layer. Therefore, the deterioration in riding comfort performance is suppressed as compared with the conventional tire. Since the adjustment of the belt component causes large PRCF to be assured, the deterioration in uneven wear resistant performance is suppressed more than a conventional case where the tread pattern component is adjusted to assure large PRCF. Accordingly, in the pneumatic radial tire 10, the large PRCF is assured to improve the straight-advancing stability of a vehicle, and to suppress the deterioration of the riding comfort performance and the uneven wear resistant performance.

If the total strength GF20 of the outer side belt layer 20 is less than 1.05 times the total strength GF30 of the inner side belt layer 30, the effect of assuring large PRCF cannot be obtained, and if it exceeds 1.5 times, an extreme lateral force occurs, and with this, a lateral difference occurs in the movement of the vehicle with respect to lateral inputs of the steering, which may bring about an adverse effect in steering stability. Accordingly, the total strength GF20 of the outer side belt layer 20 is preferably 1.05 to 1.5 times the total strength GF30 of the inner side belt layer 30.

Moreover, by making the diameter D 22 of the first cord 22 larger than the diameter D32 of the second cord 32, the total strength GF20 of the outer side belt layer 20 can be made larger than the total strength GF30 of the inner side belt layer 30.

Furthermore, by making the number of the steel monofilaments 24 of the first cord 22 larger than the number of the steel monofilaments 34 of the second cord 32, the total strength GF20 of the outer side belt layer 20 can be made larger than the total strength GF30 of the inner side belt layer 30.

Still further, by making the number of implanted first cords 22 of the outer side belt layer 20 larger than the number of implanted second cords 32 of the inner side belt layer 30, the total strength GF20 of the outer side belt layer 20 can be made larger than the total strength GF30 of the inner side belt layer 30.

Additionally, since the first cords 22 of the outer side belt layer 20 and the second cords 32 of the inner side belt layer 30 are cords made of steel, the belt rigidity of the tire is improved, and the steering stability performance is also improved. Particularly, in the case where an elastic modulus of each of the cords made of steel is 3000 kgf/mm² or more, the belt rigidity is further improved in spite of some increase in tire weight as compared with a case where organic fiber cords such as PET and nylon are used for the belts, which results in a sufficient cornering force and causes the steering stability performance to be improved.

The pneumatic radial tire 10 of the present embodiment is mounted at a vehicle such that the PRCF acts effectively with respect to the cant of the road surface.

### (Other Embodiments)

While in the first embodiment, the first cords 22 and the second cords 32 are steel cords, the constitution does not need to be limited to this, and the first cords 22 and the second cords 32 may be organic fiber cords (e.g., nylon cords, Kevlar (Kevlar: Du Pont's brand name) cords and the like).

### (Test Examples)

In order to verify the performance improvement effect of the present invention, three types of conventional tires, and three types of tires of Examples to which the present invention is applied are prepared to measure PRCF, and then, evaluation tests of vehicle flow, riding comfort and uneven wear resistance are conducted using real cars. An object of the tests is to verify that the vehicle flow is improved by assuring PRCF, and that in the present invention, no decrease in riding comfort and uneven wear resistant performance is caused.

Next, test tires are descried. The size of the test tires is all 185/60R15, and the respective test tires are assembled in standard rims defined by JATMA YEAR BOOK (2006 version, The Japan Automobile Tyre Manufactures Association, Inc. Standards) to be used for the tests. Moreover, constitutions of the test tires are shown below.

Conventional Example 1: A tire whose outer side belt layer and inner side belt layer of the first embodiment are made of steel cords with the same strength (strength of 88 kgf).

Convention Example 2: A tire whose outer side belt layer and inner side belt layer of the first embodiment are made of steel cords with the same strength (strength of 99 kgf).

Convention Example 3: A tire whose outer side belt layer and inner side belt layer of the first embodiment are made of steel cords with the same strength (strength of 104 kgf).

Example 1: A tire whose outer side belt layer of the first embodiment is made of steel cords each having a larger strength than the inner side belt layer thereof (the strength of the steel cords of the inner side belt layer is 88 kgf, and the strength of the steel cords of the outer side belt layer is 99 kgf).

Example 2: A tire whose outer side belt layer of the first embodiment is made of steel cords each having a larger strength than the inner side belt layer thereof (the strength of the steel cords of the inner side belt layer is 99 kgf, and the strength of the steel cords of the outer side belt layer is 104 kgf).

Example 3: A tire whose outer side belt layer of the first embodiment is made of steel cords each having a larger strength than the inner side belt layer thereof (the strength of the steel cords of the inner side belt layer is 88 kgf, and the strength of the steel cords of the outer side belt layer is 104 kgf).

The numbers of implanted steel cords of the outer side belt layer and the inner side belt layer of the test tires are the same. Moreover, Table 1 shows a list of the strength per steel cord.

**[Table 1]**

| | | | |
|---|---|---|---|
| Steel Cord Dia. | 0.94 | 0.81 | 0.90 |
| (Unit:mm) | | | |
| (Strand Type of Steel | (1×3) × | (1×5) × | (1+6) × |
| Cord)×Filament Dia. | 0.30 | 0.225 | 0.24 |
| (Unit:mm) | Refer to Fig. 2(A) | Refer to Fig. 2(B) | Refer to Fig. 2(C) |
| Strength per Steel Cord | 88kgf | 99kgf | 104 kgf |
| (Unit:kgf) | | | |

Next, respective evaluation tests are described. In the PRCF measurement test, each of the test tires assembled in the rims is arranged on a belt of a flat-belt testing instrument, an internal pressure is set to 230 kp, a load of 3.58 kN is applied, and then, the belt is rotated at a velocity of 10 km/h to calculate PRCF from a lateral load (slip angle: 0 degree) with respect to a tire traveling direction, which acted on the tire rotary shaft. The measured values are shown in Table 2.

After the PRCF measurement test, the vehicle flow evaluation test, riding comfort evaluation test, and uneven wear resistance evaluation test are conducted. In these tests, each of the test tires assembled in the rims is mounted on (1) Vitz by TOYOTA and (2) Corolla by TOYOTA, respectively, and the tests are conducted in a state where two people are in the vehicle.

### (Vehicle Flow Evaluation Test)

Test road surface: Proving ground of Bridgestone (straight road surface with a cant upward at one degree from left to right)
Test rate: 100 km/h
Evaluation method: Lateral flow amount during running 100 m (measured with the right direction defined as plus)

### (Riding Comfort Evaluation Test)

Test road surface: Proving ground of Bridgestone (circuit course)
Test rate: 60 km/h
Evaluation method: Sensory evaluation of a test driver

### (Uneven Wear Resistance Evaluation Test)

Test road surface: General road practical evaluation (highways: 80%, urban roads: 20%)
Evaluation method: Uneven wear ratio (life of tire central part/life of tire shoulder part)

Table 2 shows the evaluation results. In the test indicated by an index number, the Conventional Example 1 is represented as 100, and a larger index number indicates a more favorable result.

**[Table 2]**

| | Conventional Example 1 | Conventional Example 2 | Conventional Example 3 | Example 1 | Example 2 | Example 3 |
|---|---|---|---|---|---|---|
| PRCF | 40 | 49 | 62 | 58 | 71 | 83 |
| (Unit:N) | | | | | | |
| Vehicle Flow | -46 | -29 | -12 | -15 | 4 | 19 |
| (Vehicle (1)) | | | | | | |
| (Unit:cm) | | | | | | |
| Vehicle Flow | -67 | -54 | -34 | -38 | -13 | 3 |
| (Vehicle (2)) | | | | | | |
| (Unit:cm) | | | | | | |
| Riding Comfort | 100 | 95 | 90 | 98 | 93 | 95 |
| (Index No.) | | | | | | |
| Uneven Wear | 100 | 100 | 100 | 100 | 100 | 100 |
| Resistance | | | | | | |
| (Index No.) | | | | | | |

The results in Table 2 show that in Examples 1 to 3, the simultaneous pursuit of the vehicle flow (straight-advancing stability), riding comfort, and uneven wear resistance can be achieved as compared with Conventional Examples 1 to 3.

## Claims

1. A pneumatic radial tire, comprising:
a carcass toroidally extending across between a pair of bead cores;
an outer side belt layer provided outside of the carcass in a radial direction, in which a plurality of cords extending in a direction inclined with respect to a tire equatorial plane are buried in covering rubber;
an inner side belt layer provided between the outer side belt layer and the carcass, in which a plurality of cords, made of the same material as that of the cords of the outer side belt layer, and extending in a direction crossing the cords of the outer side belt layer, are buried in covering rubber; and
a tread provided outside of the outer side belt layer in the radial direction; wherein
a total strength of the outer side belt layer is larger than a total strength of the inner side belt layer.

2. The pneumatic radial tire according to claim 1, wherein the total strength of the outer side belt layer is 1.05 to 1.5 times the total strength of the inner side belt layer.

3. The pneumatic radial tire according to claim 1, wherein a diameter of each of the cords of the outer side belt layer is larger than that of each of the cords of the inner side belt layer.

4. The pneumatic radial tire according to claim 2, wherein a diameter of each of the cords of the outer side belt layer is larger than that of each of the cords of the inner side belt layer.

5. The pneumatic radial tire according to claim 1, wherein the cords of the outer side belt layer and the cords of the inner side belt layer are each formed by stranding a plurality of monofilaments, and
the number of the monofilaments of the cord of the outer side belt layer is larger than the number of the monofilaments of the cord of the inner side belt layer.

6. The pneumatic radial tire according to claim 1, wherein the number of implanted cords of the outer side belt layer is larger than the number of implanted cords of the inner side belt layer.

7. The pneumatic radial tire according to claim 1, wherein the cords of the outer side belt layer and the cords of the inner side belt layer are made of steel.
